# EUROPEAN PATENT APPLICATION

(11) **EP 2 816 703 A1**
(43) Date of publication of application: **24.12.2014**
(21) Application number: 13748641.1
(22) Date of filing: 31.01.2013
(51) Int. Cl.: H02J 7/02, H01M 2/10, H01M 10/44, H01M 10/48

(54) **VOLTAGE BALANCE CONTROL DEVICE**

(30) Priority: 15.02.2012 JP 2012030333
(71) Applicant: Mitsubishi Jidosha Kogyo Kabushiki Kaisha, Tokyo 108-8410 (JP)
(72) Inventor: WATANABE, Masanori, Tokyo 108-8410 (JP); TANAKA, Ichiro, Tokyo 108-8410 (JP); UMETANI, Tatsuhiko, Tokyo 108-8410 (JP)
(74) Representative: Vossius & Partner
(86) International application number: PCT/JP2013/000525
(87) International publication number: WO 2013/121721

(57) **Abstract**

A voltage balance control device selects a reference capacity battery cell on the basis of battery capacity and calculates a balance target voltage value according to the capacity difference between the reference capacity battery cell and each battery cell. The balance target voltage value is calculated so that the remaining charge capacity at a charging end time of an assembled battery and the remaining discharge capacity at a discharging end time thereof substantially match each other. Even if the voltage characteristic of each battery cell changes after performing voltage balancing, this makes it possible to set the minimum capacity battery cell as a charging and discharging end voltage limiting cell and fully use the capacity of the minimum capacity battery cell to bring out the maximum battery performance of the assembled battery.

## Description

### TECHNICAL FIELD

The present invention relates to a voltage balance control device which controls and adjusts variation in cell voltage among a plurality of battery cells connected in series to configure an assembled battery.

### BACKGROUND ART

In recent years, there has been a remarkable sign of dissemination of motor-driven electric vehicle powered by electric energy stored in a battery. In the electric vehicle, electric energy is stored in a rechargeable battery, and the stored electric energy is used to power an electric motor and to run the vehicle. In this sort of electric vehicle, an assembled battery configured by a plurality of battery cells connected in series is used as a power source for the electric motor. In the assembled battery, the individual battery cells will degrade to variable degrees as a result of repetitive charging and discharging, and thereby the individual battery cells will somewhat differ in their discharge characteristics.

In order to ensure this sort of assembled battery with best performances of the individual battery cells, there has been known a technique of balancing cell voltage for correcting variation in voltage among the individual battery cells. One specific example of this method is such as connecting a resistor to each battery cell, and while keeping the pace with a battery cell with the lowest voltage, allowing the residual battery cells to discharge, to thereby balancing the voltage within the assembled battery.

Alternatively, Patent Literature 1 below discloses a charge-discharge control method for a battery (assembled battery) having a plurality of battery cells connected therein, the method being designed to set a lower charge start voltage for a battery cell having a larger internal resistance, so as to avoid the battery cell from being degraded in an accelerated manner due to over-voltage applied at charging so as to exceed the maximum voltage, even if the individual battery cells composing the battery are varied in the internal resistance, and thereby to suppress unnecessary discharge for the balancing.

### CITATION LIST

PATENT LITERATURE 1: JP-A-2009-232659

### SUMMARY OF THE INVENTION

### TECHNICAL PROBLEM

Charging and discharging of the assembled battery comes to the end when any of the battery cells reaches a predetermined upper limit voltage or lower limit voltage. Performance of the assembled battery is maximized when the least capacity cell having the least capacity becomes a voltage rate-limiting cell in the process of charging and discharging. The voltage rate-limiting cell in the process of charging and discharging means a battery cell which is the first to reach the upper limit voltage (fully charged state) in the process of charging, and a battery cell which is the first to reach the lower limit voltage (amount of stored electricity fallen to the lower limit value) in the process of discharging.

The conventional techniques described above are designed to balance the voltage by equalizing the voltage of all battery cells in the assembled battery according to an appropriately scheduled time. Now, an anticipated problem is that any battery cell other than the least capacity cell would become a voltage rate-limiting cell, if the voltage should vary among the individual battery cells during succeeding use.

The above-described Patent Literature 1 also discloses a technique of shifting charging start voltage depending on the magnitude of internal resistance. The internal resistance of the battery cell is, however, not always correlated with the full charge capacity thereof. Possible cases include: the full charge capacity does not decrease even if the internal resistance largely increases; the rate of increase in the internal resistance is small as compared with the rate of decrease in the full charge capacity; and both events may occur concurrently depending on a layout in the assembled battery. For an exemplary case where the full charge capacity does not decrease despite a large increase in the internal resistance, a battery cell having a small internal resistance will be the voltage rate-limiting cell in the process of charging, whereas a battery cell having a large internal resistance will be the voltage rate-limiting cell in the process of discharging, resulting in degraded performances. Meanwhile, for an exemplary case where the rate of increase in the internal resistance is small as compared with the rate of decrease in the full charge capacity, the performance might not degrade immediately after the voltage balancing, but might degrade shortly after subsequent changes in voltage characteristic. Accordingly, the technique of the above-described Patent Literature 1 may sometimes degrade the performance of the assembled battery depending on the state of the battery cells.

### SOLUTION TO PROBLEM

It is therefore an object of the present invention, conceived after considering the above-described problems in the prior art, to provide a voltage balance control device capable of ensuring best performances of an assembled battery which is configured by a plurality of battery cells with varied capacity.

According to the present invention aimed at solving the above-described problems and at reaching the goal, there is provided a voltage balance control device which controls and adjusts variation in cell voltage of an assembled battery configured by a plurality of battery cells connected in series, the voltage balance control device includes: a capacity information storage unit which stores voltage-cell capacity curves which indicate relations between cell capacity and voltage of the individual battery cells; a target voltage calculation unit which calculates target balance voltage values of the individual battery cells; and a control unit which controls and adjusts voltage of the individual battery cells, based on the target balance voltage values calculated by the target voltage calculation unit. The target voltage calculation unit selects a reference capacity battery cell based on the cell capacity; and calculates the target balance voltage values based on differences in capacity between the reference capacity battery cell and the individual battery cells.

### ADVANTAGEOUS EFFECTS OF INVENTION

According to the present invention, tolerance against changes in voltage may be ensured both in the processes of charging and discharging, by calculating the target balance voltage value depending on differences in capacity between the reference capacity battery cell and each of the battery cells, thereby battery performance may be maintained for a long period even if the voltage of the battery cells should vary during the use. Since the battery performance thus became maintainable for a long period, so that frequency of voltage balance control may be reduced, and thereby power consumption due to unnecessary voltage valance control will be avoidable.

### BRIEF DESCRIPTION OF DRAWINGS

[FIG. 1] Fig. 1 is an explanatory drawing illustrating a method of calculating target voltage value by a target voltage calculation unit 132.
[FIG. 2] FIG. 2 is a block diagram illustrating a configuration of a voltage balance control device 100 of an embodiment.
[FIG. 3] FIG. 3 is a circuit diagram illustrating a configuration of cell control units 6, 7, 8, 9.
[FIG. 4] FIG. 4 is an explanatory drawing illustrating changes in voltage characteristic obtained after voltage balance control according to a prior art.
[FIG. 5] FIG. 5 is an explanatory drawing schematically illustrating differences between the voltage balance control by the voltage balance control device 100 and voltage balance control according to the prior art.
[FIG. 6] FIG. 6 is a flow chart illustrating operations of the voltage balance control device 100.

### DESCRIPTION OF EMBODIMENT

A preferred embodiment of the voltage balance control device according to the present invention will be detailed referring to the attached drawings.

### (Embodiment)

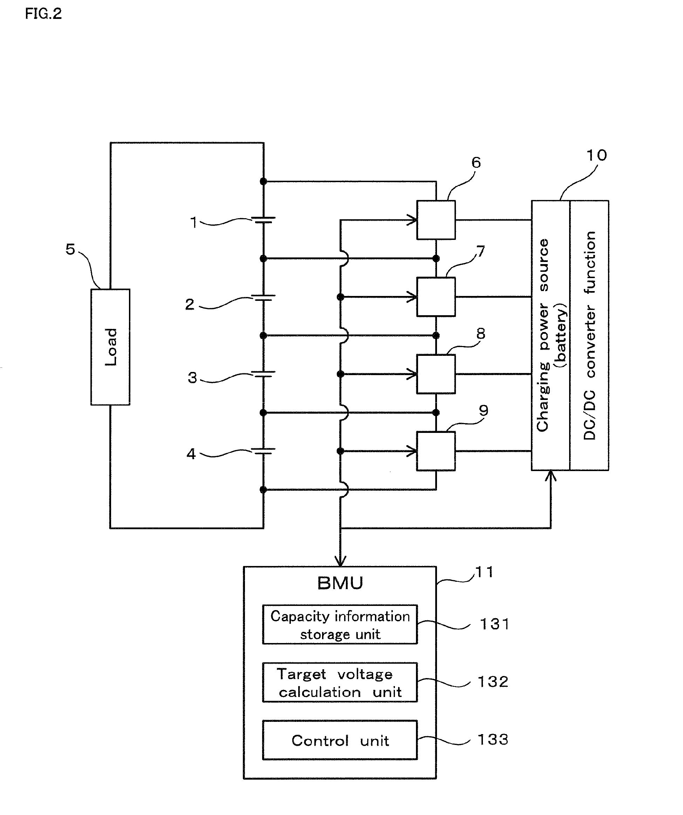

FIG. 2 is a block diagram illustrating a configuration of the voltage balance control device 100 according to an embodiment. In this embodiment, the voltage balance control device 100 controls voltage balance of an assembled battery configured by a plurality of battery cells 1, 2, 3, 4 connected in series. The voltage balance control device 100 has cell control units 6, 7, 8, 9 which respectively monitor voltage of the plurality of battery cells 1, 2, 3, 4 configuring the assembled battery, and control cell-charge current and cell-discharge current of the battery cells 1, 2, 3, 4; a charging power source 10 with a DC/DC converter function for charging the assembled battery configured by the battery cells 1, 2, 3, 4; and a BMU 11 which controls charging of the battery cells 1, 2, 3, 4, based on the monitored voltage values monitored by the cell control units 6, 7, 8, 9, the cell-charge current, and the cell-discharge current.

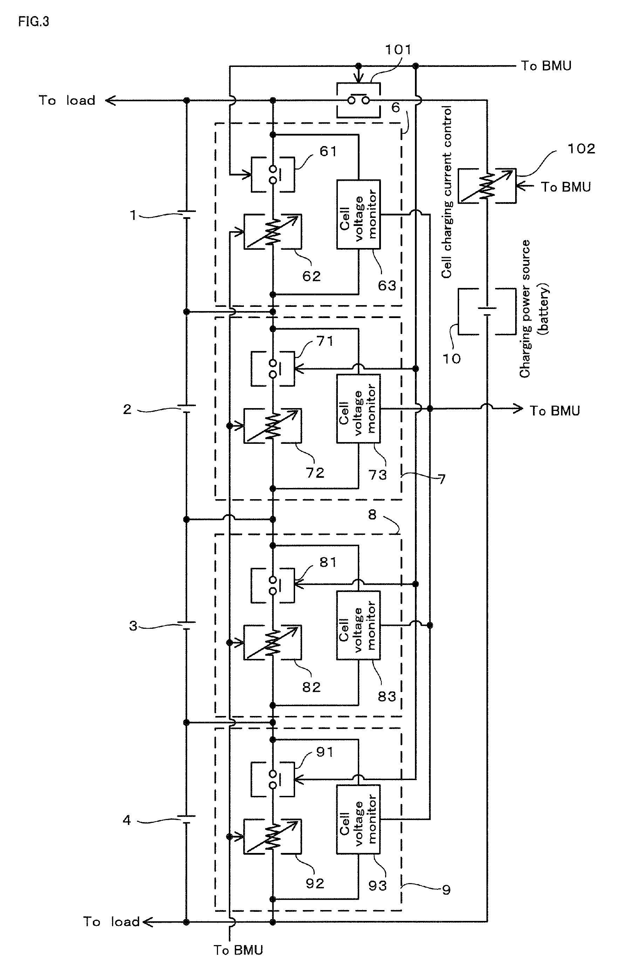

FIG. 3 is a circuit diagram illustrating a configuration of the cell control units 6, 7, 8, 9. As seen in FIG. 3, the cell control unit 6 has a switch circuit 61, a load resistor circuit 62, and a cell voltage monitor 63. Note that, in FIG. 3, interconnects among the switch circuits (61, 71, 81, 91), the load resistor circuits (62, 72, 82, 92), and the BMU 11 are not illustrated for convenience.

The switch circuit 61 is configured by a normally-open contact which is closed in response to a control signal output from the BMU 11. The load resistor circuit 62 is configured by a variable resistor circuit, the resistivity of which is varied in response to a control signal output from the BMU 11. The cell voltage monitor 63 is connected to a positive-side output terminal and a negative-side output terminal of the battery cell 1, so as to be in parallel thereto, to detect the cell voltage of the battery cell 1. The cell voltage of the battery cell 1 detected by the cell voltage monitor 63 is output to the BMU 11.

The switch circuit 61 and the load resistor circuit 62 are connected in series to configure a cell -discharge circuit of the battery cell 1, wherein the other terminal of the switch circuit 61, which is not connected to the load resistor circuit 62, is connected to the positive-side output terminal of the battery cell 1, meanwhile, the other terminal of the load resistor circuit 62, which is not connected to the switch circuit 61, is connected to the negative-side output terminal of the battery cell 1.

The cell control units 7, 8, 9 are same as the cell control unit 6, except that the battery cells connected thereto are the battery cells 2, 3, 4, so that they will not be repetitively explained below. The switch circuits, load resistor circuits and cell voltage monitors in the cell control units 7, 8, 9 are discriminated by modified reference signs, which are exemplified by switch circuits 71, 81, 91, 74, 84, 94, load resistor circuits 72, 82, 92, cell voltage monitors 73, 83, 93, and sub-batteries 122, 123, 124.

A switch circuit 101 and a current limiting circuit 102 are connected in series, and the series circuit of the switch circuit 101 and the current limiting circuit 102 is connected in series to the charging power source 10. The positive-side output terminal of the charging power source 10 is connected, via the series circuit composed of the switch circuit 101 and the current limiting circuit 102, to the positive-side output terminal of the assembled battery composed of the plurality of battery cells 1, 2, 3, 4, meanwhile the negative-side output terminal of the charging power source 10 is connected to the negative-side output terminal of the assembled battery. The series circuit of the switch circuit 101 and the current limiting circuit 102 configures a charging circuit which charges the assembled battery composed of the plurality of battery cells 1, 2, 3, 4, as powered by the charging power source 10.

The switch circuit 101 is configured by a normally-open contact which is closed in response to a control signal output from the BMU 11. The current limiting circuit 102 is configured by a variable resistor circuit, the resistivity of which is varied in response to a control signal output from the BMU 11.

While the voltage balance control in this embodiment is accomplished by allowing each battery cell to independently discharge by the cell control unit, the voltage balance control may alternatively be accomplished, for example, by providing a sub-battery in parallel to the load resistor circuit, and by independently charging and discharging each battery cell.

Referring now back to FIG. 2, the BMU 11 is configured to contain a CPU, a ROM which stores a control program and so forth, a RAM which serves as an operating space for the control program, an EEPROM which keeps various data in a rewritable manner, and an interface section which interfaces with a peripheral circuit or the like. The BMU 11 is a control ECU which controls electric power to be fed typically to an electric motor from the plurality of battery cells 1, 2, 3, 4, receives various data, analyzes the received data, and sends various commands.

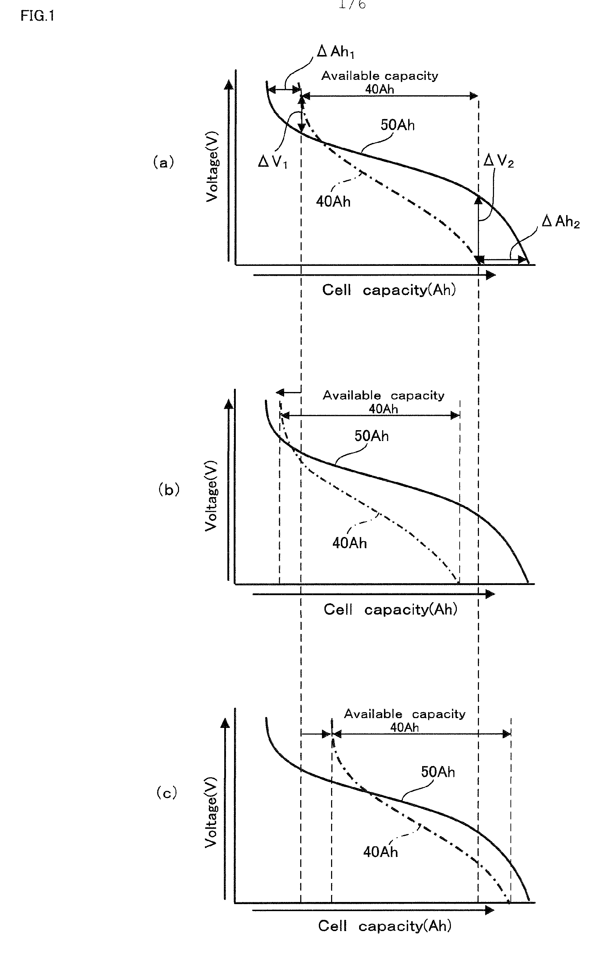

As a result of execution of the control program by the CPU, the BMU 11 also implements a capacity information storage unit 131, a target voltage calculation unit 132, and a control unit 133. The capacity information storage unit 131 stores voltage-cell capacity curves which represent relations between cell capacity of each battery cell composing the assembled battery, and voltage. An example of the voltage-cell capacity curve is shown in FIG. 1. In an exemplary method of determining the voltage-cell capacity curve, changes in voltage values of the individual battery cells are measured in the process of full charging and full discharging of the assembled battery. The voltage-cell capacity curve as illustrated in FIG. 1 is obtained by continuously recording the changes in voltage values.

The target voltage calculation unit 132 calculates target balance voltage values for the individual battery cells. The control unit 133 controls and adjusts voltage of the individual battery cells, based on the target balance voltage values calculated by the target voltage calculation unit 132. More specifically, the control unit 133 allows the individual battery cells to charge or discharge, so that the voltage values of the individual battery cells agree with the target balance voltage values.

Calculation of the target voltage values by the target voltage calculation unit 132 will be explained in further detail. The target voltage calculation unit 132 selects a reference capacity battery cell based on cell capacity of the individual battery cells; and calculates the target balance voltage values based on differences in capacity between the reference capacity battery cell and the individual battery cells. The reference capacity battery cell selectable herein is, for example, the least capacity battery cell or the largest capacity battery cell in the assembled battery. By determining the least capacity battery cell or the largest capacity battery cell as the reference capacity battery cell, a process load for selecting the reference capacity battery cell may be relieved. The target voltage calculation unit 132 calculates the target balance voltage values, typically so as to approximately match, for each battery cell, residual charge capacity of the assembled battery at full charge, with residual discharge capacity of the least capacity cell at the end of discharging.

FIG. 1 is an explanatory drawing illustrating a method of calculating the target voltage value by the target voltage calculation unit 132. Graphs in FIG. 1 represent the above-described voltage-cell capacity curves, wherein the ordinate represents cell voltage (V), and the abscissa represents cell discharge capacity (Ah). FIG. 1 shows voltage-cell capacity curves of the least capacity battery cell (with a full charge capacity of 40 Ah) selected as the reference capacity battery cell, and an undeteriorated 50-Ah battery cell (comparative cell) shown for comparative purpose. In FIG. 1, (a) corresponds to a state immediately after the voltage balance control, (b) corresponds to a state where the voltage characteristic of the least capacity battery cell elevated after use, and (c) corresponds to a state where the voltage characteristic of the least capacity battery cell declined after use.

As illustrated in FIG. 1(a), immediately after the voltage balance control, the voltage-cell capacity curve of the least capacity battery cell lies approximately at the center of the voltage-cell capacity curve of the comparative cell. This is because the voltage balance was controlled so that the residual charge capacity of the comparative cell at the end of charging approximately matches the residual discharge capacity at the end of discharging. In more detail, in the example of FIG. 1(a), in the comparative cell, the target balance voltage value is calculated so that the residual charge capacity of the assembled battery at full charge and the residual discharge capacity of the least capacity cell at the end of discharging nearly coincide. In this way, the battery cells in the assembled battery may be brought into the state where they are most tolerant against changes (variation) in voltage. More specifically, so as to equalize ΔAh₁ and ΔAh₂ in FIG. 1(a), voltage difference ΔV₁ at full charge and voltage difference ΔV₂ at the end of discharging are determined. In FIG. 1(a), the differences are set to ΔAh₁=ΔAh₂=5 Ah(=(50 Ah-40 Ah)/2).

When the voltage balance is controlled in this way, the voltage-cell capacity curve of the least capacity battery cell always falls in the range of the voltage-cell capacity curve of the comparative cell, whether the voltage characteristic of the least capacity battery cell elevates as illustrated in FIG. 1(b), or declines as illustrated in FIG. 1(c). In other words, the least capacity battery cell can become a voltage rate-limiting cell for completion of charging and discharging, both in the processes of charging and discharging. Accordingly, reserved is an available capacity of the assembled battery as a whole of 40 Ah, which equals to the full charge capacity of the least capacity battery cell . The best performance of the assembled battery at present may thus be achieved.

While FIG. 1(a) showed an exemplary case where the target balance voltage values were calculated so that, in the comparative cell, the residual charge capacity of the assembled battery at full charge approximately match the residual discharge capacity of the least capacity cell at the end of discharging, the method is not limited thereto. It is alternatively acceptable, for example, to keep a predetermined ratio between the residual charge capacity and the residual discharge capacity. Also, while FIG. 1(a) showed an exemplary case where the least capacity battery cell was selected as the reference capacity battery cell, the reference capacity battery cell may be the largest capacity battery cell, or other arbitrary battery cell.

Now as a comparative example, a voltage balance control according to a prior art will be described, referring to changes in voltage characteristic as a result of equalizing voltage of all battery cells in the assembled battery according to an appropriately scheduled time.

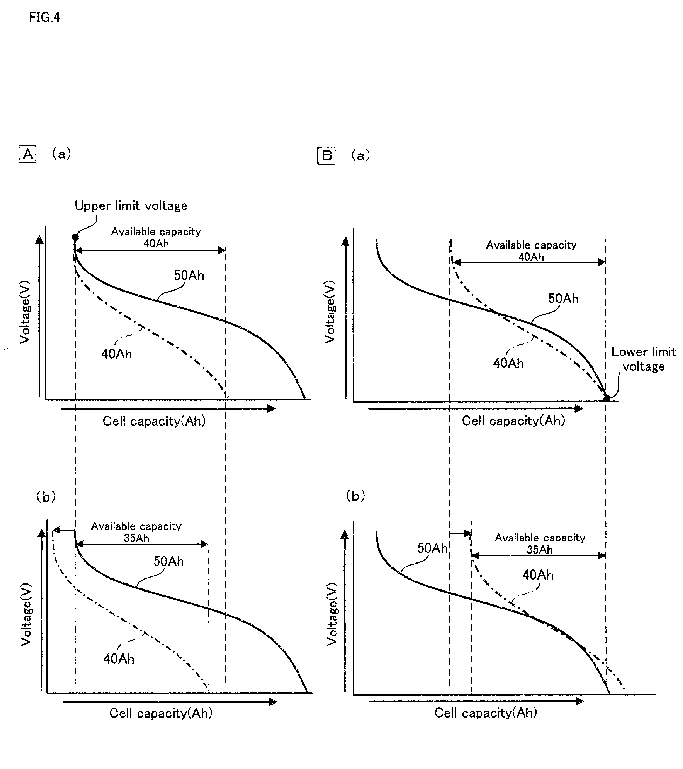

FIG. 4 is an explanatory drawing illustrating changes in voltage characteristic obtained after voltage balance control according to a prior art. Similarly to FIG. 1, in the graphs of FIG. 4, the ordinate represents cell voltage (V), the abscissa represents cell discharge capacity (Ah), (a) corresponds to states immediately after the voltage balance control, and (b) corresponds to states where the voltage characteristic of the least capacity battery cell elevated or declined after use. In FIG. 4, section A corresponds to the balance control under matched upper limit voltage, and section B corresponds to the balance control under matched lower limit voltage.

When, as illustrated in FIG. 4-A(a), the upper voltage values of the least capacity battery cell and the comparative cell were matched, an available capacity of the assembled battery as a whole of 40 Ah, which equals to the full charge capacity of the least capacity battery cell, may be reserved immediately after the voltage balance control. However, if the voltage characteristic of the least capacity battery cell elevated by 5 Ah as illustrated in FIG. 4-A(b), the comparative cell will become a voltage rate-limiting cell at the end of charging, making the available capacity of the assembled battery as a whole reduced down to 35 Ah. Similarly, when, as illustrated in FIG. 4-B(a), the lower limit voltage values of the least capacity battery cell and the comparative cell were matched, an available capacity of the assembled battery as a whole of 40 Ah, which equals to the full charge capacity of the least capacity battery cell, may be reserved immediately after the voltage balance control. However, if the voltage characteristic of the least capacity battery cell declined by 5 Ah as illustrated in FIG. 4-B(b), the comparative cell will become a voltage rate-limiting cell at the end of discharging, again making the available capacity of the assembled battery as a whole reduced down to 35 Ah.

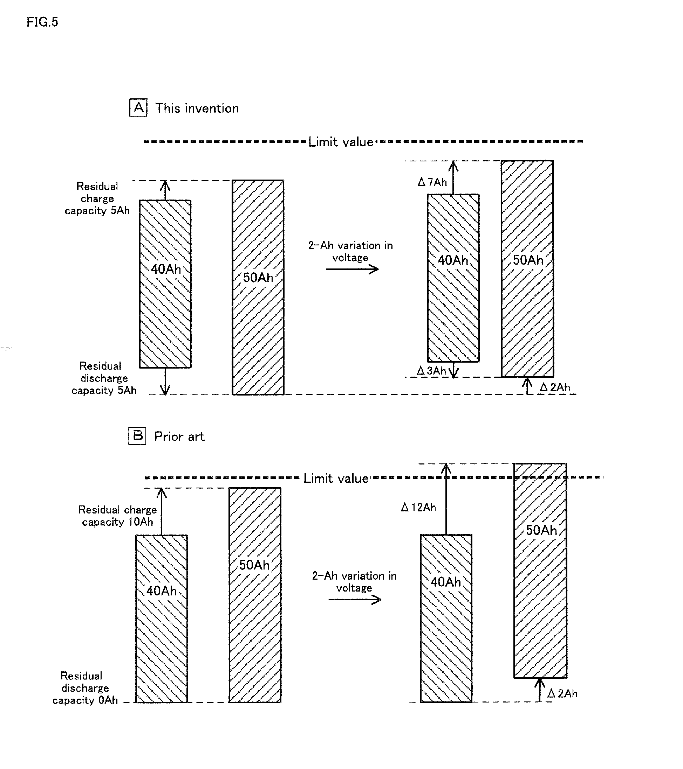

FIG. 5 is an explanatory drawing schematically illustrating difference between the voltage balance control by the voltage balance control device 100, and the voltage balance control by the prior art. In FIG. 5, section A corresponds to the voltage balance control by the voltage balance control device 100 (this invention), section B correspond to the voltage balance control of the prior art, (a) corresponds to states immediately after the voltage balance control, and (b) corresponds to states where the voltage characteristic of the least capacity battery cell elevated or declined after use. Again in FIG. 5, the vertical direction represents voltage, a battery cell with a full charge capacity of 40 Ah represents the least capacity battery cell, and a battery cell with a full charge capacity of 50 Ah represents the comparative cell.

In the voltage balance control of the prior art illustrated in FIG. 5-B, voltage difference among the individual battery cells, according to a predetermined scheduled time, is set to zero. For an exemplary case where the lower limit voltage is set to zero as illustrated in FIG. 5-B(a), the comparative cell will have a residual discharge capacity at the end of discharging of 0 Ah, and a residual charge capacity at the end of charging of 10 Ah. If the voltage characteristic of the comparative cell elevates afterward by 2 Ah as illustrated in FIG. 5-B(b), the voltage characteristic range of the least capacity battery cell will shift beyond the voltage characteristic range of the comparative cell, and will exceed the limit value at which the best performance of the assembled battery may be achieved. As a consequence, the available capacity of the assembled battery as a whole will decline.

In contrast, according to the voltage balance control by the voltage balance control device 100 as illustrated in FIG. 5-A, voltage is controlled in the comparative cell (individual battery cells) so that the residual charge capacity at the end of charging and the residual discharge capacity at the end of discharging nearly coincide, rather than setting the voltage difference among the individual battery cells to zero. For an exemplary case illustrated in FIG. 5-A(a), both of the residual charge capacity at the end of charging and the residual discharge capacity at the end of discharging are set to 5 Ah. Even if the voltage characteristic of the comparative cell elevates thereafter by 2 Ah as illustrated in FIG. 5-A(b), the voltage characteristic range of the least capacity battery cell will still fall in the voltage characteristic range of the comparative cell, making it possible to achieve the best performance of the assembled battery.

Next, operations of the voltage balance control device 100 will be explained.

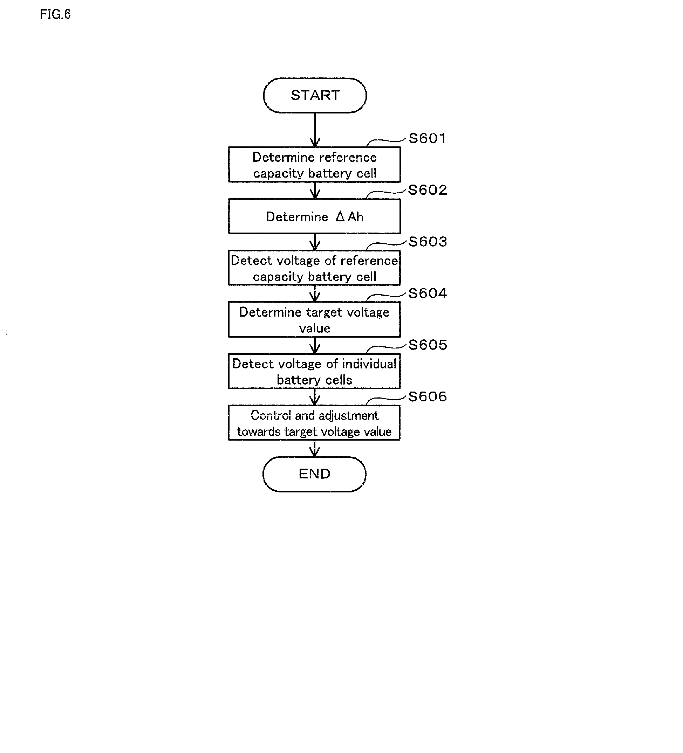

FIG. 6 is a flow chart illustrating operations of the voltage balance control device 100. The flow chart in FIG. 6 represents operations of the voltage balance control which take place at the end of charging of the assembled battery. The operations are implemented by execution of the flow chart illustrated in FIG. 6 by the BMU 11. Note that, prior to the processes illustrated in FIG. 6, the BMU 11 stores, in the capacity information storage unit 131 thereof, the voltage-cell capacity curves of the individual battery cells.

Referring now to the flow chart in FIG. 6, the voltage balance control device 100 first determines, using the target voltage calculation unit 132, the reference capacity battery cell based on the voltage-cell capacity curves of the individual battery cells (step S601). Next, the target voltage calculation unit 132 determines, for the individual battery cells, the residual charge capacity at full charge (ΔAh₁ in FIG. 1(a)) and the residual discharge capacity at the end of discharging (ΔAh₂ in FIG. 1(a)), based on the voltage-cell capacity curve of the reference capacity battery cell and the voltage-cell capacity curves of the individual battery cells (step S602).

Next, the target voltage calculation unit 132 detects voltage of the reference capacity battery cell (step S603), finds the current status of the reference capacity battery cell, and determines the target balance voltage values of the individual battery cells (step S604). The control unit 133 detects voltage of the individual battery cells (step S605), controls and adjusts the voltage values of the individual battery cells towards the target balance voltage values determined in step S604 (step S606), and terminates the processes in this flow chart.

As has been explained above, by using the voltage balance control device 100 of this embodiment, an enough level of tolerance against changes in voltage may be ensured both in the processes of charging and discharging, by calculating the target balance voltage values based on differences in capacity between the reference capacity battery cell and the individual battery cells, and thereby the cell performance may be maintained over a long period even if the voltage values of the battery cells should vary after use of the battery. According to the voltage balance control device 100, since the battery performance may be maintained over a long period, so that the number of times of voltage balance control may be reduced, and thereby power consumption due to unnecessary voltage balance control becomes avoidable.

In the voltage balance control device 100, the battery cells in the assembled battery may be kept in a state most tolerant against changes (variation) in voltage, by calculating the target balance voltage values so as to approximately match the residual charge capacity of the assembled battery at full charge, with the residual discharge capacity of the least capacity cell at the end of discharging.

In the voltage balance control device 100, also the process load for selecting the reference capacity battery cell may be relieved, by selecting the least capacity battery cell or the largest capacity battery cell as the reference capacity battery cell.

### REFERENCE SIGNS LIST

1, 2, 3, 4......battery cell, 5......load, 6, 7, 8, 9......cell control unit, 10......charging power source, 11......ECU, 100......voltage balance control device, 131......capacity information storage unit, 132......target voltage calculation unit, 133......control unit

## Claims

1. A voltage balance control device which controls and adjusts variation in cell voltage of an assembled battery configured by a plurality of battery cells connected in series, the voltage balance control device comprising:
a capacity information storage unit which stores voltage-cell capacity curves which indicate relations between cell capacity and voltage of the individual battery cells;
a target voltage calculation unit which calculates target balance voltage values of the individual battery cells; and
a control unit which controls and adjusts voltage of the individual battery cells, based on the target balance voltage values calculated by the target voltage calculation unit,
the target voltage calculation unit selecting a reference capacity battery cell based on the cell capacity; and calculating the target balance voltage values based on differences in capacity between the reference capacity battery cell and the individual battery cells.

2. The voltage balance control device of Claim 1, wherein the target voltage calculation unit calculates the target balance voltage value, so as to approximately match, for each battery cell, residual charge capacity of the assembled battery at full charge, with residual discharge capacity of the least capacity cell at the end of discharging.

3. The voltage balance control device of Claim 1, wherein the target voltage calculation unit calculates the target balance voltage value, so as to keep, for each battery cell, a predetermined ratio between residual charge capacity of the assembled battery at full charge, and residual discharge capacity of the least capacity cell at the end of discharging.

4. The voltage balance control device of any one of Claims 1 to 3, wherein the target voltage calculation unit compares a voltage-cell capacity curve of the reference capacity battery cell with the voltage-cell capacity curve of each battery cell, to determine, for each battery cell, residual charge capacity at full charge and residual discharge capacity at the end of discharging; and finds current cell capacity of the reference capacity battery cell based on voltage and the voltage-cell capacity curve of the reference capacity battery cell, to thereby determine the target balance voltage value for each battery cell.

5. The voltage balance control device of any one of Claims 1 to 4, wherein the reference capacity battery cell is the least capacity battery cell or the largest capacity battery cell in the assembled battery.

## Amended claims

### Amended claims under Art. 19.1 PCT

1. [Cancelled]

2. [Currently Amended] A voltage balance control device which controls and adjusts variation in cell voltage of an assembled battery configured by a plurality of battery cells connected in series, the voltage balance control device comprising:
a capacity information storage unit which stores voltage-cell capacity curves which indicate relations between cell capacity and voltage of the individual battery cells;
a target voltage calculation unit which calculates target balance voltage values of the individual battery cells; and
a control unit which controls and adjusts voltage of the individual battery cells, based on the target balance voltage values calculated by the target voltage calculation unit,
the target voltage calculation unit selecting an arbitrary reference capacity battery cell to be assumed as a reference; and calculating, based on the individual voltage-cell capacity curves of the reference capacity battery cell and the individual battery cells, the target balance voltage values so as to approximately match, for each battery cell, residual charge capacity of the assembled battery at full charge, with residual discharge capacity of the least capacity cell at the end of discharging.

3. [Currently Amended] A voltage balance control device which controls and adjusts variation in cell voltage of an assembled battery configured by a plurality of battery cells connected in series, the voltage balance control device comprising:
a capacity information storage unit which stores voltage-cell capacity curves which indicate relations between cell capacity and voltage of the individual battery cells;
a target voltage calculation unit which calculates target balance voltage values of the individual battery cells; and
a control unit which controls and adjusts voltage of the individual battery cells, based on the target balance voltage values calculated by the target voltage calculation unit,
the target voltage calculation unit selecting an arbitrary reference capacity battery cell to be assumed as a reference; and calculating, based on the individual voltage-cell capacity curves of the reference capacity battery cell and the individual battery cells, the target balance voltage values so as to keep, for each battery cell, a predetermined ratio between residual charge capacity of the assembled battery at full charge, and residual discharge capacity of the least capacity cell at the end of discharging.

4. [Currently Amended] The voltage balance control device of Claim 2 or 3, wherein the target voltage calculation unit compares a voltage-cell capacity curve of the reference capacity battery cell with the voltage-cell capacity curve of each battery cell, to determine, for each battery cell, residual charge capacity at full charge and residual discharge capacity at the end of discharging; and finds current cell capacity of the reference capacity battery cell based on voltage and the voltage-cell capacity curve of the reference capacity battery cell, to thereby determine the target balance voltage value for each battery cell.

5. [Currently Amended] The voltage balance control device of any one of Claims 2 to 4, wherein the reference capacity battery cell is the least capacity battery cell or the largest capacity battery cell in the assembled battery.

Statement under Art. 19.1 PCT
The Applicant hereby cancels Claim 1, due to lack of novelty and inventive step pointed out by the International Search Report.

Claim 2 and Claim 3 have been amended so as to incorporate a part of the cancelled Claim 1, and to clarify the description stated as ambiguous by the International Search Report.

The description of "the target voltage calculation unit selecting an arbitrary reference capacity battery cell to be assumed as a reference" in the amended Claim 2 and Claim 3 is based on the description as filed in paragraph [0029], and the description of "calculating, based on the individual voltage-cell capacity curves of the reference capacity battery cell and the individual battery cells, the target balance voltage values" is based on the description as filed in paragraphs [0026] to [0028].

Claim 4 and Claim 5 have been amended so as to change the claims they are subordinated to, as a result of cancellation of Claim 1.
